# EUROPEAN PATENT APPLICATION

(11) **EP 2 073 142 A2**
(43) Date of publication of application: **24.06.2009**
(21) Application number: 08254045.1
(22) Date of filing: 17.12.2008
(51) Int. Cl.: G06F 21/24

(54) **Methods for authenticating a hardware device and providing a secure channel to deliver data**

(30) Priority: 20.12.2007 US 961848
(71) Applicant: Intel Corporation, Santa Clara, CA 95052 (US)
(72) Inventor: Vembu, Balaji, Folsom, CA 95630 (US); Graunke, Gary, Hillsboro, OR 97124 (US); Sadhasivan, Sathyamurthi, Eldorado Hills, CA 95762 (US); Sreenivas, Aditya, Eldorado Hills, CA 95762 (US)
(74) Representative: Want, Clifford James

(57) **Abstract**

A method for delivering audio/video data through a hardware device using a software application comprises, at the hardware end, receiving an encrypted application key, an encrypted random session key, and encrypted audio/video data from the software. The hardware then decrypts the encrypted application key using a secret encryption key, decrypts the encrypted random session key using the application key, and decrypts the encrypted audio/video data using the random session key. The hardware may then
deliver the unencrypted audio/video data by way of a display and speakers. The secret encryption key is securely embedded within the hardware device at an earlier point in time.

## Description

### Background

Software applications may be used to deliver audio and video content from media sources such as DVDs, CD-ROMs, flash memory devices, as well as data downloaded directly onto a computer's hard drive. Software applications are generally provided by independent software vendors such as Cyberlink®, based out of Taipei, Taiwan and Corel®, based out of Ottawa, Canada.

Independent software vendors typically sign content licenses and are therefore responsible to ensure that delivery of the audio and video content occurs in a secure manner. To fulfill the terms of the content license, the software application needs to reasonably protect the flow of data between the software application and the content delivery device, such as a video and audio processing device that outputs to a computer display and speakers.

For the playback of media content, a software application typically performs at least a portion of the data processing. The software application then relies on a hardware device, such as a video processing device (e.g., a graphics card), to perform any remaining data processing and to deliver the processed data. Since the software application must protect the data being sent to the video processing device, the software application must authenticate the video processing device and must set up a secure channel over which to send the data.

There are a couple of available mechanisms for authenticating a video processing device and setting up a secure channel. In one mechanism, the software application and the video processing device can share a secret key. This mechanism is considered weak since a compromise of the secret key in the software application affects all other vendor applications. Another mechanism involves the use of a public-private key infrastructure, but this involves a significant hardware cost since it involves RSA style exponentiation.

### Brief Description of the Drawings

Figure 1 is a method of provisioning an encrypted application key to a software vendor in accordance with an implementation of the invention.
Figure 2A graphically illustrates the provisioning of the encrypted application key to the software vendor.
Figure 2B graphically illustrates the encryption of the application key using a block cipher encryption and a secret encryption key.
Figure 3 is a run-time method for authenticating a hardware device and establishing a secure channel in accordance with an implementation of the invention.
Figure 4A graphically illustrates the run-time authentication process and the establishing of the secure channel.
Figure 4B graphically illustrates the decryption of the encrypted application key using a block cipher decryption and a secret encryption key.
Figure 4C graphically illustrates the decryption of the encrypted random session key using a block cipher decryption and the application key.

### Detailed Description

Described herein are systems and methods of protecting the flow of data between a source device and a sink device, for instance, between a software application and a hardware device. A source device is typically a producer or creator of data while the sink device is a consumer of data. In the following description, various aspects of the illustrative implementations will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative implementations. However, it will be apparent to one skilled in the art that the present invention may be practiced without the specific details. In other instances, well-known features are omitted or simplified in order not to obscure the illustrative implementations.

Various operations will be described as multiple discrete operations, in turn, in a manner that is most helpful in understanding the present invention, however, the order of description should not be construed to imply that these operations are necessarily order dependent. In particular, these operations need not be performed in the order of presentation.

Implementations of the invention provide robust methods for a source device to authenticate and set up a secure data channel with a sink device. The source and sink devices may be hardware devices or software applications. For instance, some implementations of the invention may provide methods for a first hardware device (i.e., source device) to authenticate and set up a secure channel with a second hardware device (i.e., sink device). Alternate implementations of the invention may provide methods for a software application (i.e., source device) to authenticate and set up a secure channel with a hardware device (i.e., sink device). In further implementations, the source device may be a hardware device while the sink device is a software application, or the source device and the sink device may both be software applications.

The methods of the invention ensure that data is transferred from the source device to the sink device in a secure and protected manner. Implementations of the invention accomplish this by utilizing three different keys in a novel mechanism. Two of the keys, a secret encryption key that permanently resides in the sink device and an application key that is provided to the source device, are generated during an initial provisioning phase. These two keys are used, in part, to authenticate the sink device. The third key, a random session key, is a run-time key generated by the source device to establish a secure channel between the source device and the sink device.

To more clearly illustrate how the methods of the invention are used in a real world scenario, the following description focuses on using methods of the invention to authenticate a hardware device and to set up a secure channel between a software application and the hardware device. The software application functions as the source device and the hardware application functions as the sink device. Although this is the focus of the description below, it should be noted that the invention is not limited to a software source device nor is it limited to a hardware sink device.

In the implementations of the invention described herein, the hardware device consists of a video processing device and the software application serves to deliver audio and video data to the video processing device. The methods of the invention ensure that the audio/video data is delivered in a secure and protected manner. For the implementations described below, the secret encryption key permanently resides in the video processing device, the application key is provided to a software vendor who generates the software application, and the random session key is generated by the software application.

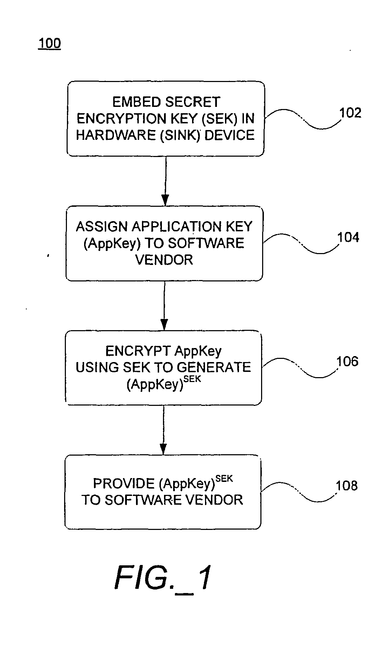

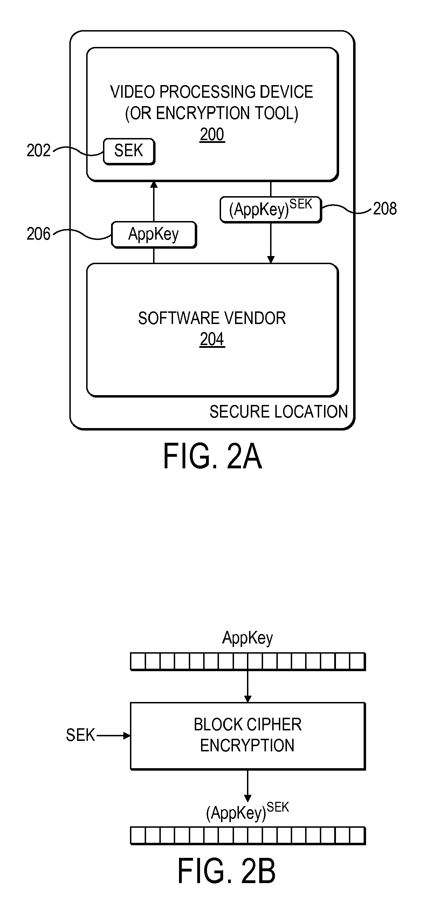

Figure 1 is a method 100 of provisioning an encrypted application key to a software vendor in accordance with an implementation of the invention. Figure 2 graphically illustrates the provisioning of the encrypted application key to the software vendor in accordance with an implementation of the invention.

In accordance with implementations of the invention, a secret encryption key is permanently embedded in a hardware device, such as a video processing device (process 102 of Figure 1). In some implementations, the video processing device may consist of one or a collection of integrated circuit devices embedded on the main motherboard of a computer. In other implementations, the video processing device may consist of a graphics card that is separate from but electrically coupled to a computer motherboard. In various implementations, the graphics card may be coupled to the computer motherboard by way of an accelerated graphics port (AGP), a peripheral component interface (PCI) slot, a PCI Express slot, or other similar expansion ports. As will be recognized by those of skill in the art, the video processing device is a device that is capable of processing audio/video data. In alternate implementations, the hardware device may be a device other than a video processing device.

The secret encryption key (SEK) may be a 128-bit key. In alternate implementations, the SEK may have a larger number of bits, such as 192 or 256 bits, or a smaller number of bits, such as 32 or 64 bits. Those of skill in the art will recognize that the number of bits may vary based on the level of security that is desired. In some implementations of the invention, the SEK may be a 128-bit, a 192-bit, or a 256-bit key that is compatible with the Advanced Encryption Standard (AES). Other encryption methods may be used as well.

In implementations of the invention, the SEK may be permanently embedded in the video processing device by way of a special fuse. For instance, the SEK may be written into a memory array of the video processing device over a write path that includes the special fuse. This special fuse may then be intentionally blown to prevent the SEK from being accessed or tampered with by external sources. The only remaining access to the SEK is internal to the video processing device and this internal access is unavailable to external sources. In alternate implementations, the SEK may be hardwired into the register transfer level (RTL).

Figure 2A graphically illustrates a video processing device 200 that includes an embedded SEK 202. The SEK 202 is permanently embedded within the video processing device 200 and may not be accessed or tampered with by external sources. As described above, the SEK 202 may be a 128, 192, or 256-bit key that may be used with AES or another cipher encryption process.

Returning the Figure 1, a unique application key (AppKey) is assigned to a software vendor (104). Each software vendor that produces a software application for use with the video processing device of the invention is assigned a unique AppKey. No two software vendors will share the same AppKey. In some cases, a software vendor may be assigned two or more AppKeys. For instance, if the first AppKey is compromised, a second AppKey may be assigned. In some implementations, the AppKey is chosen by the software vendor. In alternate applications, the AppKey is generated by the manufacturer of the video processing device. In further implementations, the AppKey is chosen by an independent third party.

In some implementations of the invention, the AppKey may be a 128-bit key. In alternate implementations, the AppKey may have a larger number of bits, such as 192 or 256 bits, or a smaller number of bits, such as 32 or 64 bits. As will be explained below, in addition to being assigned to a software vendor, the AppKey will later serve as an encryption key. As such, the AppKey may be a 128-bit, a 192-bit, or a 256-bit key that is compatible with AES or an alternate cipher encryption process.

Next, the unique AppKey is encrypted using the SEK to generate an encrypted AppKey, designated herein as (AppKey)^{SEK} (106). In some implementations, a block cipher encryption may be used. In further implementations of the invention, a standardized encryption such as AES may be used. AES is a specific block cipher that has been adopted as an encryption standard. As will be known to those of skill in the art, this block cipher may be used with the SEK to encrypt the AppKey. For instance, as described in Figure 2B, the AppKey may be run through the block cipher encryption using the SEK to output an encrypted (AppKey)^{SEK}. In alternate implementations, ciphers other than AES may be used.

In some implementations, the encryption may be run on the video processing device itself. For example, the unique AppKey may be sent through the video processing device where it becomes encrypted with the SEK. In further implementations, a device that is not specifically a video processing device may be used to encrypt the unique AppKey. For instance, an encryption tool may be used to accept the unique AppKey and encrypt it with the SEK using AES in the same manner as a video processing device. The only requirement is that the SEK used in the encryption tool match the SEK that is permanently embedded in the numerous video processing devices sold to consumers. This enables each of the consumer-purchased video processing devices to decrypt the (AppKey)^{SEK} using the AES block cipher and the SEK. In implementations of the invention, the encryption tool may consist of a computer that is running encryption software.

The encrypted AppKey, (AppKey)^{SEK}, is then provided to the software vendor (108). The software vendor only has access to the AppKey and the (AppKey)^{SEK}. The software vendor never has access to the SEK. Furthermore, because an encryption methodology such as AES may be used, the software vendor is unable to decipher the SEK even though it has access to both the AppKey and the (AppKey)^{SEK}.

Turning to Figure 2A, a software vendor 204 is shown interacting with the video processing device 200 during the initial provisioning of the encrypted application key (AppKey)^{SEK}. As mentioned above, an encryption tool may be used in lieu of the video processing device. The software vendor 204 provides an AppKey 206 to the video processing device (or encryption tool) 200. Again, although Figure 2 shows the AppKey 206 being provided by the software vendor 204, in alternate implementations it may be provided by the manufacturer of the video processing device 200 or an independent third party. The video processing device (or encryption tool) 200 encrypts the AppKey 206 using the SEK 202. An encryption methodology such as AES may be used for the encryption. The video processing device (or encryption tool) 200 then outputs an encrypted AppKey, represented as (AppKey)^{SEK} 208, and this (AppKey)^{SEK} 208 is provided to the software vendor 204.

Figures 1 and 2 therefore describe the initial provisioning phase of the invention during which an encrypted AppKey is generated and provided to a software vendor. In accordance with implementations of the invention, and as shown in Figure 2A, the encrypting of the AppKey to generate the (AppKey)^{SEK} may occur at a secure location. For instance, the provisioning phase may be carried out at the manufacturing facility where the video processing device is fabricated. In alternate implementations, the encryption tool may be provided to the software vendor who then maintains the encryption tool in a secure location and uses the tool to generate the encrypted AppKey. It is worth noting that this encryption process should not be carried out on generic user platforms for security purposes.

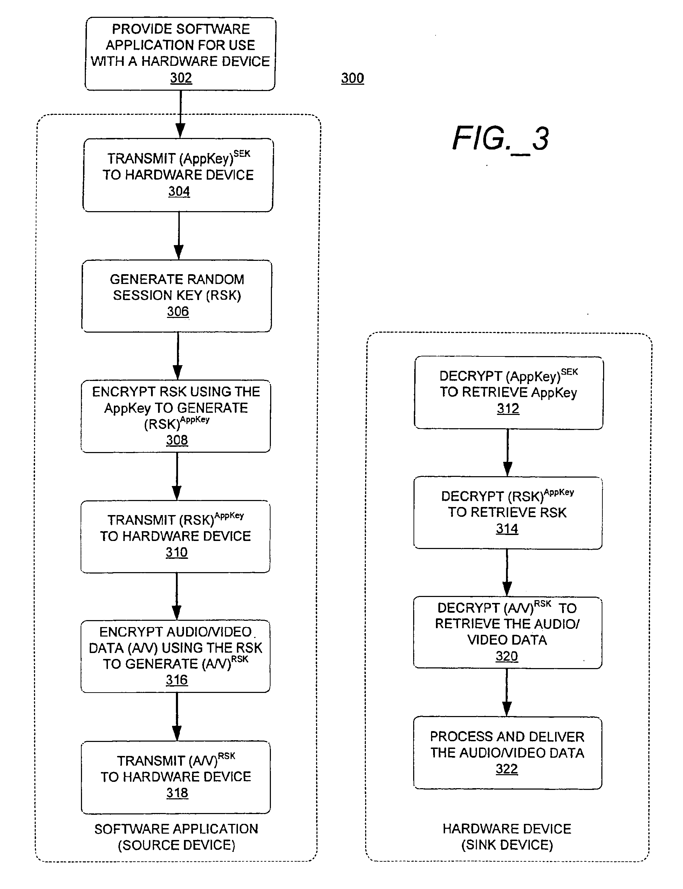

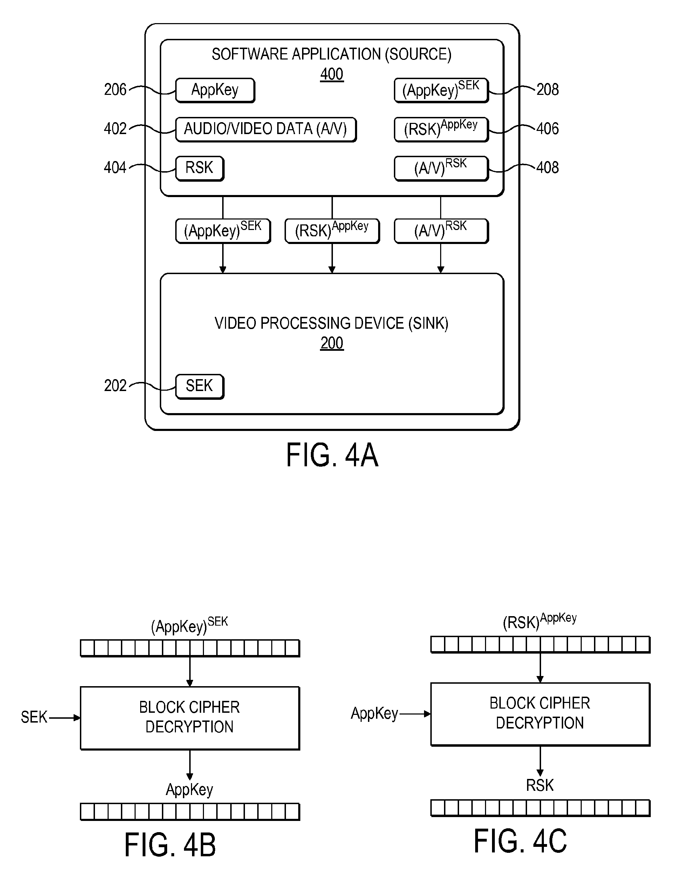

Figure 3 is a run-time method 300 for authenticating a hardware device (i.e., a sink device), such as a video processing device, and establishing a secure channel between a software application (i.e., a source device) and the video processing device, in accordance with an implementation of the invention. Figure 4A graphically illustrates the run-time authentication process and the establishing of the secure channel in accordance with an implementation of the invention. As mentioned above, the secure channel is used to deliver audio/video data from the software application to the video processing device in a protected manner. In implementations of the invention, the software application and the hardware device may reside within the same computer system or within separate computer systems. For instance, the software application may reside on a hard disk and/or within computer memory (e.g., random access memory or flash memory) of a first computer system while the video processing device may be integrated into or coupled to the main motherboard of either the first computer system or of a second computer system. In some implementations, one or both computer systems may be housed within a consumer electronics device, such as a DVD player, a portable media player, or an audio/video receiver. If two separate computer systems are used, the two computer systems may be communicatively coupled by way of wired or wireless means.

Starting with Figure 3, a software application is provided by a software vendor for use with the video processing device (process 302 of Figure 3). The software application is designed to at least partially process audio/video data. In accordance with implementations of the invention, embedded in the software application is the AppKey that is unique to the software vendor. Furthermore, embedded in the software application is also the encrypted (AppKey)^{SEK}, which consists of the AppKey after it was encrypted by the video processing device or an encryption tool using a SEK. The process for generating the (AppKey)^{SEK} for a particular software vendor has been described above.

Generally, the software application protects the AppKey and the (AppKey)^{SEK} using standard tamper resistance software methods that are known in the art. Conventional software applications generally use such methods for protecting license keys and audio/video data during processing. It should be noted that if the AppKey and the (AppKey)^{SEK} are compromised, one would still be unable to determine the value of the SEK since an encryption methodology such as AES is used.

Figure 4A illustrates a software application 400 and a video processing device 200. As described above, permanently embedded in the video processing device 200 is the SEK 202. Included in the software application 400 is the AppKey 206 that is unique to the software vendor and the encrypted (AppKey)^{SEK} 208 that consists of the AppKey 206 after it has been encrypted using the SEK 202. The software application 400 also includes the audio/video data (A/V) 402 that needs to be securely transmitted to the video processing device 200.

At run-time, the software application and the video processing device are called on to process and deliver audio/video data. Prior to or concurrent with the transmission of the audio/video data, the software application transmits the (AppKey)^{SEK} to the video processing device (304). Since the (AppKey)^{SEK} is encrypted, it travels between the software application and the video processing device in a highly protected manner that is nearly impossible to decode.

The software application also generates a random session key (RSK) (306). The RSK is generally a unique key that is randomly generated by the software application and is not necessarily tied to any software vendor. A standard random number generation library may be used by the software application to generate the session key.

The software application then encrypts the RSK using the AppKey (308). This generates an encrypted (RSK)^{AppKey}. As mentioned above, the AppKey may be a 128, 192, or 256-bit key that is compatible with standard encryption methods. In one implementation, the encryption may be carried out using similar techniques as were used to encrypt the AppKey with the SEK. For instance, a block cipher encryption such as AES may be used. The RSK may be run through the block cipher encryption using the AppKey to output an encrypted (RSK)^{AppKey}. In other implementations, alternate methods of encrypting the RSK with the AppKey may be used.

Next, the software application transmits the encrypted (RSK)^{AppKey} to the video processing device (310). The encrypted (RSK)^{AppKey} may be sent to the video processing device around the same time as the encrypted (AppKey)^{SEK} or it may be sent at a later time. Generally, the software application will transmit both the encrypted (RSK)^{AppKey} and the encrypted (AppKey)^{SEK} at around the same time. As with the (AppKey)^{SEK}, since the (RSK)^{ApPKey} is encrypted, it travels between the software application and the video processing device in a highly protected manner that is nearly impossible to decode.

After receiving the encrypted (AppKey)^{SEK} from the software application, the video processing device decrypts the (AppKey)^{SEK} using the SEK that is permanently embedded within the video processing device (312). The video processing device has now retrieved the AppKey. Figure 4B illustrates how the (AppKey)^{SEK} may be run through the block cipher decryption using the SEK to output the decrypted AppKey. AES may be used as the decryption standard. The video processing device therefore receives the AppKey in a protected manner.

Next, after receiving the encrypted (RSK)^{AppKey} from the software application, the video processing device decrypts the (RSK)^{AppKey} using the AppKey that it previously decrypted (314). The video processing device has now retrieved the RSK. Figure 4C illustrates how the encrypted (RSK)^{AppKey} may be run through the block cipher decryption using the AppKey to output the decrypted RSK. Again, AES may be used as the decryption standard. The video processing device therefore receives the RSK in a protected manner. At this point in the process flow, the software application and the video processing device have a common shared RSK.

The software application may now send encrypted audio/video data to the video processing device in a protected manner using the RSK. First, the software application encrypts the audio/video data using the RSK (316). The encrypted audio/video data is referred to herein as (A/V)^{RSK}. In one implementation, the encryption may be carried out using similar techniques as were used to encrypt the AppKey with the SEK and the RSK with the AppKey. In another implementation, electronic codebook (ECB) mode may be used for key encryption while counter (CTR) mode may be used for audio/video data encryption. It should be noted that for audio/video data encryption, any encryption mode available in the art may be used, including but not limited to any of the available variations of block cipher encryption techniques such as cipher-block chaining (CBC), propagating cipher-block chaining (PCBC), cipher feedback (CFB), and output feedback (OFB). The software application then transmits the encrypted (A/V)^{RSK} to the video processing device (318). As the audio/video data travels between the software application and the video processing device, the encryption prevents the (A/V)^{RSK} from being intercepted and decoded.

The video processing device receives the encrypted (A/V)^{RSK} and decrypts it using the RSK it has previously decrypted (320). In one implementation, the decryption may be carried out using similar techniques as were used to decrypt the (AppKey)^{SEK} and the (RSK)^{AppKey}. The decryption method implemented here will be selected based on what is appropriate for the encryption method that was used on the audio/video data.

The video processing device has now retrieved the unencrypted audio/video data, which it may process and deliver (322). For instance, the video processing device may process the data and display the video on a display device while delivering the audio by way of a speaker.

The use of encryption protects the transmission of data. And because the video processing device cannot decrypt the AppKey or the RSK without prior possession of the SEK, the hardware is implicitly authenticated. Hardware without the SEK cannot decrypt any of the data and therefore cannot process and deliver the audio/video data.

Figure 4A illustrates the flow of encrypted data between the software application 400 and the video processing device 200. As shown, the software application transmits the (AppKey)^{SEK} 208 to the video processing device 200. The software application 400 also generates a random session key RSK 404, encrypts the RSK 404 with the AppKey 206 to generate (RSK)^{AppKey} 406, and transmits (RSK)^{AppKey} 406 to the video processing device 200. Finally, the software application 400 encrypts the A/V 402 with the RSK 404 to generate encrypted audio/video data (A/V)^{RSK} 408, and transmits (A/V)^{RSK} 408 to the video processing device 200. As shown in Figure 4A, all of the data that flows from the software application 400 to the video processing device 200 is encrypted.

The overall process flow of the invention is robust because only a hardware device that contains the SEK can unwrap the AppKey and then the final session key RSK. An attacker on a user platform can only observe the encrypted (AppKey)^{SEK}, the encrypted (RSK)^{AppKey}, and the encrypted (A/V)^{RSK} that flow between the software application and the hardware device. The encryption prevents the data from being intercepted and decoded. The decryption of the AppKey and the RSK from the software application to the hardware device can only be accomplished if the hardware device contains the secret key SEK.

The secret key SEK is only known to the manufacturer of the hardware device. As noted above, the software vendors only receive the (AppKey)^{SEK}, which is an encrypted data string that cannot be decrypted by the software vendor since they do not have access to the SEK. Each software vendor can have their own independent AppKey. Therefore, a compromise of vendor A's AppKey exposes only vendor A and does not impact vendor B.

As noted above, although the specification described the protection of media content, the methods of the invention are not limited to the transfer of audio and video data. For example, the methods of the invention may be used to protect the transfer of other forms of data between other types of software and hardware devices, including but not limited to financial transactions and generic network traffic.

The invention may be implemented in one or a combination of hardware, firmware, and software. The hardware may be a computer system that includes a processor, which refers to any device or portion of a device that processes electronic data from registers and/or memory to transform that electronic data into other electronic data that may be stored in registers and/or memory. A processing platform may comprise one or more processors.

The invention may also be implemented as instructions stored on a machine-readable medium, which may be read and executed by a processing platform to perform the operations described herein. A machine-readable medium may include any mechanism for storing, transmitting, or receiving information in a form readable by a machine (e.g., a computer). For example, a machine-readable medium may include read only memory (ROM); random access memory (RAM); magnetic disk storage media; optical storage media; flash memory devices; electrical, optical, acoustical or other form of propagated signals (e.g., carrier waves, infrared signals, digital signals, the interfaces that transmit and/or receive those signals, etc.), and others. Propagated signals include signals transmitted over the Internet and over wireless communication means. The term "wireless" and its derivatives may be used to describe circuits, devices, systems, methods, techniques, communications channels, etc., that may communicate data through the use of modulated electromagnetic radiation through a non-solid medium.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize.

These modifications may be made to the invention in light of the above detailed description. The terms used in the following claims should not be construed to limit the invention to the specific implementations disclosed in the specification and the claims. Rather, the scope of the invention is to be determined entirely by the following claims, which are to be construed i accordance with established doctrines of claim interpretation.

## Claims

1. A method for a sink device to process data received from a source device comprising:
receiving an encrypted application key from the source device;
receiving an encrypted random session key from the source device;
receiving encrypted data from the source device;
decrypting the encrypted application key using a secret encryption key held by the sink device, thereby retrieving an application key;
decrypting the encrypted random session key using the application key, thereby retrieving a random session key;
decrypting the encrypted data using the random session key, thereby retrieving unencrypted data; and
processing the unencrypted data.

2. The method of claim 1, wherein the source device comprises a software application and the sink device comprises a hardware device.

3. The method of claim 2, wherein the secret encryption key is permanently embedded within the hardware device.

4. The method of claim 1, wherein the encrypted application key is encrypted using AES and the secret encryption key.

5. The method of claim 1, wherein the encrypted random session key is encrypted using AES and the application key.

6. A method for a source device to transmit data to a sink device comprising:
transmitting an encrypted application key to the sink device, wherein the encrypted application key comprises an application key encrypted with a secret encryption key held by the sink device;
generating a random session key;
encrypting the random session key with the application key;
transmitting the encrypted random session key to the sink device;
encrypting the data with the random session key; and
transmitting the encrypted data to the sink device.

7. The method of claim 6, wherein the source device comprises a software application and the sink device comprises a hardware device.

8. The method of claim 6, wherein the encrypting of the random session key with the application key is carried out using AES.

9. The method of claim 6, wherein the encrypting of the media content with the random session key is carried out using AES.

10. A method of processing data through a hardware device using a software application, comprising:
transmitting an encrypted application key from the software application to the hardware device, wherein the encrypted application key comprises an application key encrypted using a block cipher encryption and a secret encryption key held by the hardware device;
using the hardware device to decrypt the encrypted application key using a block cipher decryption and the secret encryption key held by the hardware device, thereby retrieving the application key;
using the software application to generate a random session key;
using the software application to encrypt the random session key using a block cipher encryption and the application key;
transmitting the encrypted random session key from the software application to the hardware device;
using the hardware device to decrypt the encrypted random session key using a block cipher decryption and the application key, thereby retrieving the random session key;
using the software application to encrypt the data with the random session key;
transmitting the encrypted data from the software application to the hardware device;
using the hardware device to decrypt the encrypted data using the random session key, thereby retrieving the data; and
processing the data.

11. The method of claim 10, wherein the block cipher encryption and decryption are based on AES.

12. The method of claim 10, wherein the hardware device comprises a video processing device.
